# EUROPÄISCHE PATENTANMELDUNG

(11) **EP 2 639 188 A1**
(43) Veröffentlichungstag der Anmeldung: **18.09.2013**
(21) Anmeldenummer: 13158693.5
(22) Anmeldetag: 12.03.2013
(51) Int. Cl.: B65G 47/57, B65G 1/127

(54) **Beschickungs- und/oder Entnahmevorrichtung und Verfahren zur Handhabung von Lagergutträgern in einem Lagersystem sowie selbiges**

(30) Priorität: 12.03.2012 DE 102012102076
(71) Anmelder: Kardex Produktion Deutschland GmbH, 76756 Bellheim (DE)
(72) Erfinder: Schäffler, Reinhold, 86480 Waltenhausen-Weiler (DE)
(74) Vertreter: Grünecker, Kinkeldey, Stockmair & Schwanhäusser

(57) **Zusammenfassung**

Die Erfindung betrifft eine Beschickungs- und/oder Entnahmevorrichtung (300) zum Beschicken eines automatisierten Lagersystems (100) mit Lagergutträgern (400) bzw. Entnehmen der Lagergutträger (400) aus dem Lagersystem (100), mit einer Verschiebeeinrichtung (301), die ausgestaltet ist, zum Verschieben eines Lagergutträgers (400) in einer Einlagerungsrichtung (I) und/oder in einer Auslagerungsrichtung (O) an einer Beschickungs- und/oder Entnahmestelle (104) des Lagersystems (100) mit dem Lagergutträger (400) zusammenzuwirken. Des Weiteren betrifft die Erfindung ein Lager (1) sowie ein Verfahren, bei dem mit einer Beschickungs-und/oder Entnahmevorrichtung (300) ein Lagergutträger (400) durch Verschieben an einer Beschickungs- und/oder Entnahmestelle (104) eines automatisierten Lagersystems (100) in das Lagersystem (100) ein bzw. aus dem Lagersystem (100) ausgelagert wird. Um Ein- und/oder Auslagerungszeiten zu verkürzen, ist erfindungsgemäß vorgesehen, dass die Verschiebeeinrichtung (301) ausgestaltet ist, an einer von der Beschickungs- und/oder Entnahmestelle (104) beabstandeten weiteren Beschickungs- und/oder Entnahmestelle (104) des Lagersystems (100) mit wenigstens einem weiteren Lagergutträger (400) zusammenzuwirken.

## Beschreibung

Die vorliegende Erfindung betrifft eine Beschickungs- und/oder Entnahmevorrichtung zum Beschicken eines automatisierten Lagersystems mit Lagergutträgern bzw. Entnehmen der Lagergutträger aus dem Lagersystem, mit einer Verschiebeeinrichtung, die ausgestaltet ist, zum Verschieben eines Lagergutträgers in einer Einlagerungsrichtung und/oder in einer Auslagerungsrichtung an einer Beschickungs- und/oder Entnahmestelle des Lagersystems mit dem Lagergutträger zusammen zu wirken.

Des Weiteren betrifft die Erfindung ein Lager sowie ein Verfahren, bei dem mit einer Beschickungs- und/oder Entnahmevorrichtung ein Lagergutträger durch Verschieben an einer Beschickungs- und/oder Entnahmestelle eines automatisierten Lagersystems in das Lagersystem ein- bzw. aus dem Lagersystem ausgelagert wird.

Beschickungs- und/oder Entnahmevorrichtungen, Lager und Verfahren zum Beschicken und/oder Entnehmen von Lagersystemen mit bzw. Entnehmen von Lagergutträgern aus diesen sind im Stand der Technik bekannt. So weisen Lagersysteme meist Beschickungs- und/oder Entnahmeöffnungen auf, an denen Beschickungs- und/oder Entnahmevorrichtungen angeordnet sein können, um Lagergutträger in die Öffnung hinein zu schieben bzw. aus diesen herauszuziehen. Bei den Lagersystemen kann es sich beispielsweise um Lagerlifte handeln, in denen ein Extraktor vertikal und horizontal verfahrbar ist und Lagergutträger zwischen Lagerplätzen und der Beschickungs- und/oder Entnahmeöffnung hin und her fährt. Alternativ sind Umlauflager bzw. sogenannte Paternosterlager im Einsatz, in denen Lagergutträger auf umlaufenden Ablagen eingelagert und durch Zirkulation des gesamten Lagerbestandes zur Beschickungs-und/oder Entnahmeöffnung hin oder von dieser weg transportiert werden.

Es besteht stets das Bedürfnis, Lagerkosten zu minimieren. Lagerkostenminimierung geschieht beispielsweise durch die Beschleunigung von Ein- und Auslagerungsvorgängen sowie durch die Vergrößerung und Zentralisierung von Lagern. Gleichzeitig besteht das Bedürfnis, Lagergüter möglichst filialgerecht zu kommissionieren. In anderen Worten sollen sogenannte Kollis, also Stückgüter bzw. kleinste zu kommissionierende Einheiten, zu möglichst geringen Kosten bereitgestellt werden. Die Kollis werden in der Regel aus Großabnahmemengen entnommen oder zusammengestellt, die beispielsweise auf Paletten bereitgestellt sind. Die auf den Paletten enthaltenen Waren müssen depalettiert und dann als Kollis je nach von einer Filiale bestellter Abnahmemenge versandfertig bereitgestellt werden.

Insbesondere der Aufwand für die versandfertige Bereitstellung erhöht sich mit der Anzahl und Unterschiedlichkeit der zu kommissionierenden Waren. So können bei einer Filialbelieferung beispielsweise Sortimente aus dem Lebensmitteleinzelhandel (LEH), wie dem Trockensortiment (Troso), den Molkereiprodukten (Mopro) sowie den Getränken zusammen mit Nonfood-Artikeln bestellt sein, was eine Mischpalettenbildung erfordert. Bei Mischpaletten ist zu beachten, dass diese einen statisch stabilen Aufbau aufweisen, in dem schwere und stabile Produkte unten angeordnet und leichtere, zerbrechlichere Produkte auf den schwereren abgelegt und anschließend die Produkte gesichert werden. Zudem werden Waren aus Kommissionierungslagern teilweise direkt an Endkunden ausgeliefert (Business to Customer - BTC).

Aus dem Stand der Technik bekannte Lager vermögen die oben genannten Anforderungen bei einer Kommissionierung von Kollis nicht vollständig zu befriedigen. So sind die Handhabungs- bzw. Handlingzeiten zu lang. Die Leistungsmöglichkeiten automatisierter Lagersysteme können bislang nicht voll ausgeschöpft werden.

Der Erfindung liegt folglich die Aufgabe zugrunde, ein möglichst weitgehend automatisiertes Lager mit automatisierten Lagersystemen zur Kommissionierung von Kollis bereitzustellen.

Diese Aufgabe wird erfindungsgemäß für die eingangs genannte Beschickungs- und/oder Entnahmevorrichtung dadurch gelöst, dass die Verschiebeeinrichtung ausgestaltet ist, an einer von der Beschickungs- und/oder Entnahmestelle beabstandeten weiteren Beschickungs- und/oder Entnahmestelle des Lagersystems mit wenigstens einem weiteren Lagergutträger zusammen zu wirken.

Beim eingangs genannten Lager wird die Aufgabe durch eine erfindungsgemäße Beschickungs- und/oder Entnahmevorrichtung gelöst.

Im eingangs genannten Verfahren wird die Aufgabe dadurch gelöst, dass mit der Beschickungs-und/oder Entnahmevorrichtung ein weiterer Lagergutträger durch Verschiebung an einer weiteren Beschickungs- und/oder Entnahmestelle in das Lagersystem ein- bzw. aus dem Lagersystem ausgelagert wird.

Die erfindungsgemäßen Lösungen haben den Vorteil, dass mit einer Beschickungs- und/oder Entnahmevorrichtung mehrere Beschickungs- und/oder Entnahmestellen bedient werden können. Somit können Kollis bzw. auf Lagergutträgern angeordnete Waren schnell und automatisch von einer erfindungsgemäßen Beschickungs- und/oder Entnahmevorrichtung ein- bzw. ausgelagert werden. Die Ein- und/oder Auslagerung kann beispielsweise von einer Transportvorrichtung bzw. auf diese erfolgen. Die Transportvorrichtung kann ihrerseits automatisiert sein und beispielsweise als eine Rollenbahn oder ein Laufband ausgestaltet sein.

Der erfindungsgemäßen Lösungen können mit den folgenden weiteren, jeweils für sich vorteilhaften Ausführungsformen beliebig kombiniert und weiter verbessert werden:

Der Aufbau der Beschickungs- und/oder Entnahmevorrichtung lässt sich vereinfachen, indem wenigstens eine Verschiebeeinrichtung ausgestaltet ist, an der Beschickungs- und/oder Entnahmestelle und der weiteren Beschickungs- und/oder Entnahmestelle mit dem Lagergutträger bzw. dem wenigstens einen weiteren Lagergutträger gleichzeitig zusammen zu wirken. Mit anderen Worten können mit einer Verschiebeeinrichtung in einem Zuge mehrere Lagergutträger ein- oder ausgelagert werden, was dabei hilft, Kommissionierungszeiten weiter zu senken.

Die Verschiebeeinrichtung kann ein Verschiebeorgan und wenigstens ein weiteres Verschiebeorgan aufweisen, die ausgestaltet sind, mit dem Lagergutträger bzw. dem wenigstens einen weiteren Lagergutträger zusammen zu wirken. Somit kann für jeden Lagergutträger ein Verschiebeorgan vorgesehen sein, das individuell gesteuert sein kann.

Eine Bedienung mehrerer Beschickungs- und/oder Entnahmestellen, die beispielsweise an einer Beschickungs- und/oder Entnahmeöffnung vorgesehen sein können, lässt sich dadurch vereinfachen, dass das Verschiebeorgan und das wenigstens eine weitere Verschiebeorgan in einer gemeinsamen Verschiebehöhe angeordnet sind.

Eine Beschickung und/oder Entnahme von Lagergutträgern lässt sich weiter vereinfachen, indem das Verschiebeorgan und das wenigstens eine weitere Verschiebeorgan in einer gemeinsamen Verschiebeebene angeordnet sowie gleich und/oder entgegengesetzt ausgerichtet sein können. Die Verschiebeebene kann eine Ebene sein, deren normaler Vektor im Wesentlichen parallel zur Ein- und/oder Auslagerungsrichtung verläuft. In einer gemeinsamen Verschiebeebene liegend können die Verschiebeorgane simultan eine Reihe von Lagergutträgern ein-und/oder auslagern.

Eine Vielzahl von Verschiebeorganen lässt sich besonders einfach dadurch gleichförmig ausrichten, dass das Verschiebeorgan und das wenigstens eine weitere Verschiebeorgan an einer gemeinsamen Verschiebeachse angebracht sein können. Die Verschiebeachse kann also mehrere Verschiebeorgane tragen.

Besonders eine Bedienung von sich an einer oder mehreren Transportvorrichtungen gegenüberliegenden Lagersystemen lässt sich vereinfachen, indem die Verschiebeachse und eine weitere Verschiebeachse beide an einer Aufhängung gemeinsam beweglich montiert sein können. Durch die gemeinsame Aufhängung können sämtliche Verschiebeorgane einer Beschickungs-und/oder Entnahmevorrichtung mittels einer Steuerung bzw. eines Motors gleichzeitig gesteuert bzw. angetrieben werden.

Die Verschiebeorgane können jeweils wenigstens ein Verschiebeelement aufweisen, das im Betrieb der Beschickungs- und/oder Entnahmevorrichtung in der Einlagerungsrichtung eine Druckkraft und/oder in der Auslagerungsrichtung eine Zugkraft auf den Lagergutträger auswirkt. So lassen sich die Lagergutträger mit Hilfe der Verschiebeorgane einfach in der Einlagerungsrichtung durch Druck bzw. in der Auslagerungsrichtung durch Zug verschieben. Lagergutträger können bei der Ein- und/oder Auslagerung individuell gehandhabt werden, indem die Verschiebeelemente getrennt voneinander aktivierbar sind.

Die Verschiebeelemente können einen Druck und einen Zug einfach auf die Lagergutträger auswirken, indem die Verschiebeelemente jeweils wenigstens ein Zugelement beinhalten. Das wenigstens eine Zugelement kann mechanisch, elektrisch bzw. elektromagnetisch, pneumatisch und/oder durch Erzeugung eines Unterdrucks bzw. Vakuums mit einem Lagergutträger zusammenwirken bzw. diesen als eine Art Greifer fassen. Beispielsweise kann das Zugelement einen Elektromagneten beinhalten. Der Elektromagnet kann stromfrei als Schub- bzw. Druckelement dienen und unter Strom als Zugelement dienen. Vorteilhafterweise kann der Elektromagnet besonders einfach mit einem Lagergutträger zusammenwirken, indem der Lagergutträger eine ferromagnetische bzw. durch magnetische Kräfte anziehbare Betätigungsfläche oder ein Handhabungs- bzw. Betätigungselement aufweisen kann, das von einer Außenseite des Lagergutträgers zugänglich angeordnet sein kann.

Ein erfindungsgemäßes Lager kann beispielsweise verbessert werden, indem die Beschickungs- und/oder Entnahmevorrichtung zwischen zwei übereinanderliegenden Beschickungs-und/oder Entnahmestellen angeordnet ist. So kann ein Lagersystem des Lagers zwei übereinanderliegende Beschickungs- und/oder Entnahmestellen aufweisen, über die Lagergutträger jeweils ein- und/oder ausgelagert werden können. Somit ist ein gleichzeitiges oder zumindest kurz aufeinander abfolgendes Ein- und Auslagern von Lagergutträgern in bzw. aus dem Lagersystem möglich.

Die Beschickungs- und/oder Entnahmevorrichtung kann zwischen sich an einer Transportvorrichtung gegenüberliegenden Lagersystemen angeordnet sein. Somit können mit einer Beschickungs- und/oder Entnahmevorrichtung zwei bzw. mehrere Lagersysteme möglichst gleichzeitig oder zumindest in kurzer Abfolge hintereinander bedient werden, indem Lagergutträger mit der Beschickungs- und/oder Entnahmevorrichtung von der Transportvorrichtung in die Beschickungs- und/oder Entnahmestellen geschoben bzw. aus diesen auf die Transportvorrichtung gezogen werden.

Ein erfindungsgemäßes Verfahren lässt sich dadurch weiter verbessern, dass das Verschieben des Lagergutträgers und des wenigstens einen weiteren Lagergutträgers simultan erfolgen kann. Durch eine simultane Verschiebung mehrerer Lagergutträger beim Ein- bzw. Auslagern der Lagergutträger in bzw. aus einem Lagersystem kann Zeit gespart werden.

Die vorliegende Erfindung ermöglicht eine vollständige Automatisierung eines Lagers, insbesondere eines Kommissionierungslagers, in dem Waren sortenrein auf Produktpaletten angeliefert und möglichst schnell zu Kollis kommissioniert werden sollen. Die Produktpaletten (Originalpaletten) können beispielsweise aus einem Nachschublager zu einem Vereinzelungsbereich per Stapler oder Fördertechnik transportiert werden. Dieser Prozess kann von einem übergeordneten Warenmanagementsystem (WMS) gesteuert sein. Beispielsweise mittels Barcodes (EAN) kann eine Produktpalette identifiziert werden. Diese Information kann dann ein Materialflussrechner (PPG) für die Ansteuerung eines automatischen Depalettierungsroboters oder alternativ der Steuerung eines Hubtisches an einem manuellen Depalettierungsplatz nutzen. Originalpaletten können in der Regel komplett depalettiert und die Leerpaletten in einem Leerpalettenpuffer (Magazin) gespeichert werden. Ist die maximale Kapazität dieses Magazins erreicht, so können Leerpalettenstapel in der Fläche gelagert werden.

Sich aus den Produktpaletten ergebene vereinzelte Kollis können per Gurtförderer zu einer automatisierten Station transportiert werden, in der die Kollis auf Lagergutträger, sogenannte Trays gesetzt werden. Die Produktinformation bzw. der EAN-Code kann mit einer eindeutigen Lagergutträgeridentifizierungsnummer (Barcode) verknüpft werden. Somit kann der Kolli bis einer Verbringung auf die/den Zielpaletten/Zielrollbehälter eindeutig identifiziert werden. Die Lagergutträgeridentifizierungsnummer dient zusätzlich zur Steuerung der Lagergutträger auf dem Lagergutträger-Fördersystem sowie zur Ein- und Auslagerung der Lagergutträger bzw. Kollis in einem dynamischen Lagergutträgerpufferspeicher, der als automatisiertes Lagersystem, wie oben beschrieben, ausgeführt sein kann. Die Lagergutträger können dann in einem Magazin bzw. Lagersystem für leere Lagergutträger stapelweise zwischengepuffert werden. Dieses Magazin kann Packplätze von der Station entkoppeln, auf der Kollis auf die Lagergutträger gesetzt werden.

Zur Einlagerung können die Lagergutträger auf einer als Zentraleinlagerförderbahn dienenden Transportvorrichtung in sogenannten Clustern eingelagert werden. Die Aufteilung der Lagergutträger in die Cluster kann (je nach Palette) nach Füllgrad bzw. Auslastung der einzelnen die Klasse bildenden Lagersysteme geschehen. Ein Nachschub aus dem Nachschublager kann in den Cluster erfolgen, in dem sich die zugehörigen Waren befinden.

Die Lagergutträger mit den Kollis können in einem oder mehreren als dynamischen Kollipuffer (DKP) eingesetzten Lagersystem bzw. Lagersystemen nach den folgenden Gesichtspunkten verteilt werden:
- Gleichverteilung der Kollis innerhalb eines Clusters;
- Berücksichtigung der Gängigkeit der Produkte (ABC-Kommissionierung);
- Verteilung der Kollis innerhalb eines Lagersystems auf eine beliebige Anzahl verschiedener Träger, insbesondere eines Umlauflagers; und/oder
- Berücksichtigung einer maximal zulässigen Unlast in einem Lagersystem.

Durch diese Einlagerungsstrategien kann bei der Auslagerung der mit den Kollis bestückten Lagergutträgern eine möglichst optimale (kurze) Zugriffszeit auf das nächste erforderliche Produkt sichergestellt werden. Durch eine Auswahl von Optionen aus einem Cluster kann eine erste Sequenzierungsstufe für die versandgerechte/filialgerechte Palettierung erfolgen.

Auf einer als Auslagerförderbahn ausgestalteten Transportvorrichtung eines jeden Lagersystems können die erforderlichen mit den Kollis bestückten Lagergutträger in aufsteigender Produktionsreihenfolge (gemäß im Vorfeld ermittelter Auslagerungsreihenfolge der Zielpaletten/eines Kollikonfigurators) bereitgestellt werden. Eine finale Reihenfolgebildung kann durch eine Einschleusung der mit den Kollis versehenen Lagergutträger in eine als zentrale Abtransportbahn ausgelegte Transportvorrichtung erfolgen.

Packplätze können nach Aspekten der Arbeitsergonomie gestaltet sein und sicherstellen, dass eine anhaltend hohe Dauer-Leistung von durchschnittlich 600 bis 700 Kollis pro Stunde gepackt werden können. Als kleine Pufferspeicher eingesetzte Lagersysteme am Packplatz können ein kontinuierliches Arbeiten am Packplatz ohne Unterbrechung ermöglichen. Eine Bedienperson bzw. ein Packer kann mittels eines Lichtpointers auf eine Zielposition für einen Kolli hingewiesen werden. Eine Zieleinheit (Palette oder Rolli) kann per Hubtisch lagenweise abwärts getaktet werden, damit ein ergonomisches Arbeiten auf annähernd gleicher Höhe sichergestellt ist. Verpackte Produkte können mittels einer Banderole automatisch gesichert und anschließend per Fördertechnik an eine zentrale Stelle transportiert und automatisch gewickelt werden. Hier kann jede Palette bzw. jeder Rolli ein Versandetikett erhalten, das vom WMS erzeugbar ist.

In einem erfindungsgemäßen Lager helfen erfindungsgemäße Beschickungs- und/oder Entnahmevorrichtungen mit Verschiebeeinrichtungen, die mehrere Beschickungs- und/oder Entnahmestellen bedienen, auf technisch einfachem Wege, Lagergutträger einzeln und/oder als komplette Lagen ein- und/oder auszulagern. Eine Kombination von Ein- und/oder Auslagerungsvorgängen ist möglich. Darauf reduzieren niedrige Ein- und/oder Auslagerungszeiten, auch als Pickzeiten bezeichnet, die zu schnellen Ein- und/oder Auslagerungsvorgängen und somit hohen Pickzahlen beitragen. Die Verschiebeeinrichtungen können durch ihren möglichst einfachen Aufbau eine möglichst geringe Störanfälligkeit aufweisen und mehrere Lagersysteme bedienen. Lagergutträger sind nicht zwingend erforderlich, aber von Vorteil, um die Waren technisch vereinheitlicht zu handhaben. Die Lagergutträger können beispielsweise aus Kunststoff gefertigt sein.

Eine erfindungsgemäße Beschickungs- und/oder Entnahmevorrichtung erlaubt eine lagenweise Ein- bzw. Auslagerung. Auch eine einzelne Ein- und/oder Auslagerung ist möglich. Einzelne Ein- und/oder Auslagerungen ist im Doppelspiel möglich. Eine Ein- und Auslagerungsreihenfolge kann beliebig gewählt sein. Die Nutzung eines zusätzlichen automatischen Kommissionierungslager-Moduls ermöglicht eine Erweiterung des Sortiments bzw. der Anzahl kommissionierter Artikel. Durch einen Einsatz von zwei Lagersystemen als Pufferlager bzw. Lagersortierer kann eine Anzahl unterschiedlicher Artikel weiter erhöht werden.

Als Transportvorrichtungen können Rollenförderer von den Depalettierstationen zu den Lagersystemen eingesetzt werden. Je Lagersystem bzw. Kombination sich gegenüberliegender Lagersysteme können zwei parallel verlaufende Transportvorrichtungen in Form von Staurollenförderern eingesetzt werden. Eine Transportvorrichtung in Form eines Staurollenbandes mit Pufferplätzen kann für eine Vorsortierung vorgesehen werden. Optional ist es möglich, zwei gegenüberliegende Lagersysteme für eine Lagenpufferung und Sequenzierung einzusetzen. Darüber hinaus können über die Transportvorrichtungen Leer-Ladungsträger-transporte vorgenommen werden.

Eine erfindungsgemäße Beschickungs- und/oder Entnahmevorrichtung bzw. ein erfindungsgemäßes Lager können einen modularen Aufbau aufweisen, in dem sämtliche Beschickungs-und/oder Entnahmevorrichtungskomponenten sowie Lagersystemvarianten je nach Art zu kommissionierender Artikel (Schnell-/Langsamdreher) kombiniert werden können. Artikel mit Sondermaßen sowie Langsamdreher können manuell eingeschleust werden. Ein Sequenzer kann bei vielen unterschiedlichen Artikeln verwendet werden. Alle Lagervarianten können in allen Richtungen modular aufgebaut und erweiterbar sein.

Im Folgenden ist die Erfindung beispielhaft anhand möglicher Ausführungsformen in Bezug auf die beigefügten Zeichnungen genauer beschrieben. Die bei diesen Ausführungsformen dargestellten Merkmalskombinationen dienen lediglich Anschauungszwecken. Einzelne Merkmale können nach Maßgabe ihrer oben beschriebenen Vorteile auch weggelassen werden, wenn es bei bestimmten Anwendungen auf den Vorteil des jeweiligen Merkmals nicht ankommt.

Es zeigen:
- Fig. 1: eine schematische Perspektivansicht eines Abschnittes eines erfindungsgemäßen Lagers;
- Fig. 2a: eine schematische Vorderansicht des in Fig. 1 dargestellten Lagers;
- Fig. 2b: eine schematische Querschnittsansicht des in Fig. 1 gezeigten Lagers entlang der in Fig. 2a dargestellten Schnittlinie A-A;
- Fig. 2c: eine schematische Draufsicht auf das in Fig. 1 dargestellte Lager;
- Fig. 3: eine schematische Perspektivansicht einer erfindungsgemäßen Beschickungs-und/oder Entnahmevorrichtung;
- Fig. 4a: eine schematische Vorderansicht der in Fig. 3 dargestellten Beschickungs- und/oder Entnahmevorrichtung;
- Fig. 4b: eine schematische Seitenansicht der in Fig. 3 dargestellten Beschickungs- und/oder Entnahmevorrichtung;
- Fig. 4c: eine Draufsicht auf die in Fig. 1 dargestellte Beschickungs- und/oder Entnahmevorrichtung;
- Fig. 5a: eine schematische Seitenansicht eines erfindungsgemäßen Verschiebeorgans; und
- Fig. 5b: eine schematische Perspektivansicht des in Fig. 5a dargestellten Verschiebeorgans.

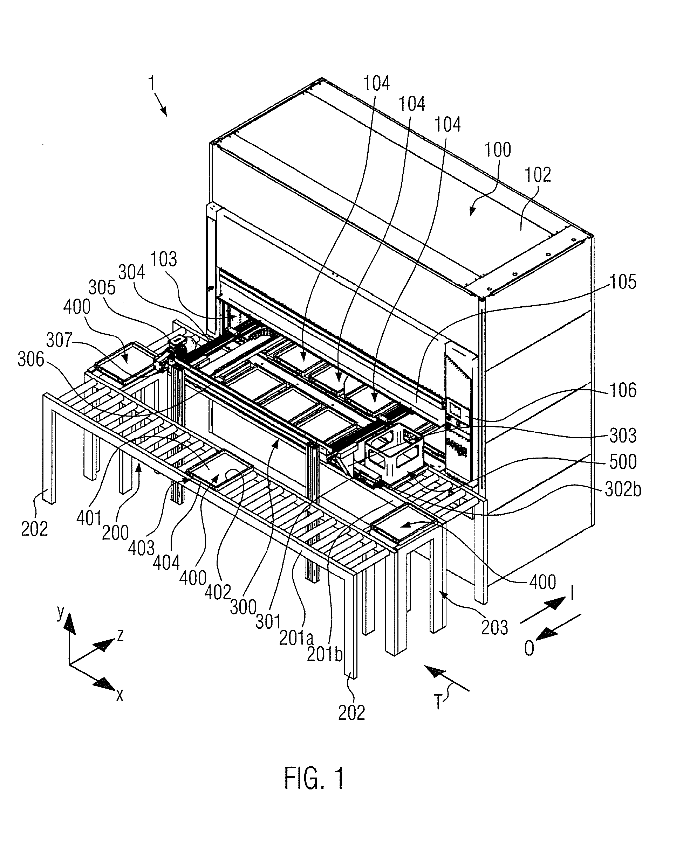

Fig. 1 zeigt ein erfindungsgemäßes Lager 1 bzw. einen Abschnitt davon in einer schematischen Perspektivdarstellung. Das Lager 1 umfasst wenigstens ein Lagersystem 100, eine Transportvorrichtung 200, eine Beschickungs- und/oder Entnahmevorrichtung 300 sowie Lagergutträger 400. Das Lagersystem 100 kann als Lagerlift, Umlaufregallager oder Paternosterlager ausgestaltet sein.

Ein Lagerraum 101 (hier noch nicht gezeigt) des Lagersystems 100 ist von einem Gehäuse 102 umgeben. Auf einer der Transportvorrichtung 200 zugewandten Seite des Lagersystems 100 ist eine Beschickungs- und/oder Entnahmeöffnung 103 des Lagersystems 100 angeordnet. Über die Beschickungs- und/oder Entnahmeöffnung sind die Lagergutträger 400 in das Lagersystem 101 ein- bzw. aus diesem auslagerbar. Die Einlagerung geschieht in einer Einlagerungsrichtung I, die im Wesentlichen quer zu einer Transportrichtung T der Transportvorrichtung 200 von dieser weg verläuft. Eine Auslagerungsrichtung O des Lagersystems 100 verläuft entgegengesetzt zur Einlagerungsrichtung I auf die Transportvorrichtung 200 zu. In anderen Worten verläuft die Einlagerungsrichtung I in einer Querrichtung Z des Lagersystems 100, die wiederum quer zu einer Höhenrichtung Y sowie einer Seitrichtung X des Lagersystems 100 verläuft.

In der Beschickungs- und/oder Entnahmeöffnung 103 sind eine Vielzahl von in Seitrichtung X bzw. Transportrichtung T sowie quer zur Einlagerungsrichtung I bzw. Auslagerungsrichtung O nebeneinander angeordnete Beschickungs- und/oder Entnahmestellen 104 vorgesehen. Über jede der Beschickungs- und/oder Entnahmestellen 104 ist jeweils mindestens ein Lagergutträger 400 in das Lagersystem 100 ein- bzw. aus diesem auslagerbar. Im vorliegenden Fall sind beispielsweise sechs Beschickungs- und/oder Entnahmestellen 104 in Transportrichtung T nebeneinander angeordnet. Es kann auch eine beliebige andere Anzahl von Beschickungs-und/oder Entnahmestellen 104 vorgesehen sein. Des Weiteren kann das Lagersystem 100 über ein Türelement 105 an der Beschickungs- und/oder Entnahmeöffnung 103 zum Verschließen des Lagerraums 101 verfügen, das als vertikal verschiebliche Schiebetür oder Rolltor ausgestaltet sein kann. Zur manuellen Bedienung und/oder Programmierung des Lagersystems 100 ist dieses mit einer Bedieneinrichtung 106 versehen, die auch als Computerschnittstelle dienen kann.

Die Transportvorrichtung 200 verfügt über zwei Transportbahnen 201, die als Rollenbahn, Förderbänder oder dergleichen ausgestaltet sein können. Die Transportbahnen 201 sind jeweils auf Ständern 202 gelagert. Zwischen den Transportbahnen 201 sind Transfereinrichtungen 203 der Transportvorrichtung 200 vorgesehen, über die Lagergutträger 400 zwischen zwei parallel und/oder senkrecht zueinander verlaufenden Transportbahnen 201 a, 201 b ausgetauscht, bzw. übergeben werden können. Auch ein Zwischenlagern von Lagergutträgern 400 auf den Transfereinrichtungen 203 ist denkbar, damit Lagergutträger 400 zur Beschickung oder nach der Entnahme in einer gewünschten Reihenfolge in der Transportrichtung T angeordnet werden können.

Die Beschickungs- und/oder Entnahmevorrichtung 300 verfügt über wenigstens eine Verschiebeeinrichtung 301, die wenigstens eine Verschiebeachse 302 umfasst. Die wenigstens eine Verschiebeachse 302 erstreckt sich in Transportrichtung T und ermöglicht es, über die ganze in Transportrichtung T bzw. Seitrichtung X gemessene Breite der Beschickungs- und/oder Entnahmeöffnung 103 bzw. über sämtliche Beschickungs- und/oder Entnahmestellen 104 Lagergutträger 104 in das Lagersystem 100 zu schieben bzw. aus diesem herauszuziehen. Die Verschiebeachse 302b ist an zwei Aufhängungen 303 befestigt, die an jeweils in bzw. entgegen der Transportrichtung T weisenden Enden der Verschiebeachse 302b angeordnet sind. Die Aufhängungen 303 sind an zwei Schienen 304 parallel zueinander beweglich montiert. An einer der beiden Aufhängungen 303 ist ein Elektromotor bzw. Servomotor 305 angeordnet. Der Elektromotor 305 treibt eine Achse 306 an, die mit beiden Aufhängungen 303 verbunden ist und dort jeweils in einem Getriebe 307 mündet. Die Getriebe 307 wirken mit der jeweiligen Schiene 304 zusammen, um die Verschiebeeinrichtung 301 in Einlagerungsrichtung I oder Auslagerungsrichtung O zu verfahren.

Die Lagergutträger 400 besitzen eine Aufnahmefläche 401, die von einem Rand 402 umgeben ist. An ihren Stirnseiten 403 sind die Lagergutträger 400 jeweils mit wenigstens einem Handhabungselement 404 versehen, das ausgestaltet ist, zumindest eine Zugkraft am Lagergutträger 400 anzusetzen. So kann das Handhabungselement 404 beispielsweise eine metallische Fläche sein, die dazu ausgestaltet ist, von einer durch die Verschiebeeinrichtung 301 aufgebrachten Magnetkraft angezogen zu werden, damit die Lagergutträger 400 schieb- und ziehbar sind. Alternativ und zusätzlich kann das Handhabungselement 404 so ausgestaltet sein, dass es mit einem mechanisch wirkenden Zugelement 319 in Eingriff bringbar ist, beispielsweise durch Form- und/oder Kraftschluss. Auch kann das Handhabungselement 404 so ausgestaltet sein, dass es eine Ansaugfläche für ein pneumatisch bzw. über Unterdruck wirkendes Zugelement 319 bietet.

Ferner zeigt Fig. 1 Lagergut 500 in Form eines Kastens, bei dem es sich beispielsweise um einen Getränkekasten handeln kann, der einen Kolli, also eine kleinste zu kommissionierende Einheit darstellen kann. Das Lagergut 500 ist auf einem Lagergutträger 400 positioniert. In der in Fig. 1 dargestellten Position kann der Lagergutträger 400 samt darauf befindlichem Lagergut 500 durch die Verschiebeeinrichtung 301 von der Transportbahn 201 b aus in Einlagerungsrichtung I in die Beschickungs- und/oder Entnahmeöffnung 103 geschoben werden, um in das Lagersystem 100 eingelagert zu werden. Der Lagergutträger 400 mit dem Lagergut 500 kann aber auch durch die Verschiebeeinrichtung 301 aus der Beschickungs- und/oder Entnahmeöffnung 103 in der Auslagerungsrichtung O auf die Transportbahn 201 b gezogen worden sein, um gemeinsam mit weiteren Lagergutträgern 400 in der Transportrichtung T weiter transportiert zu werden.

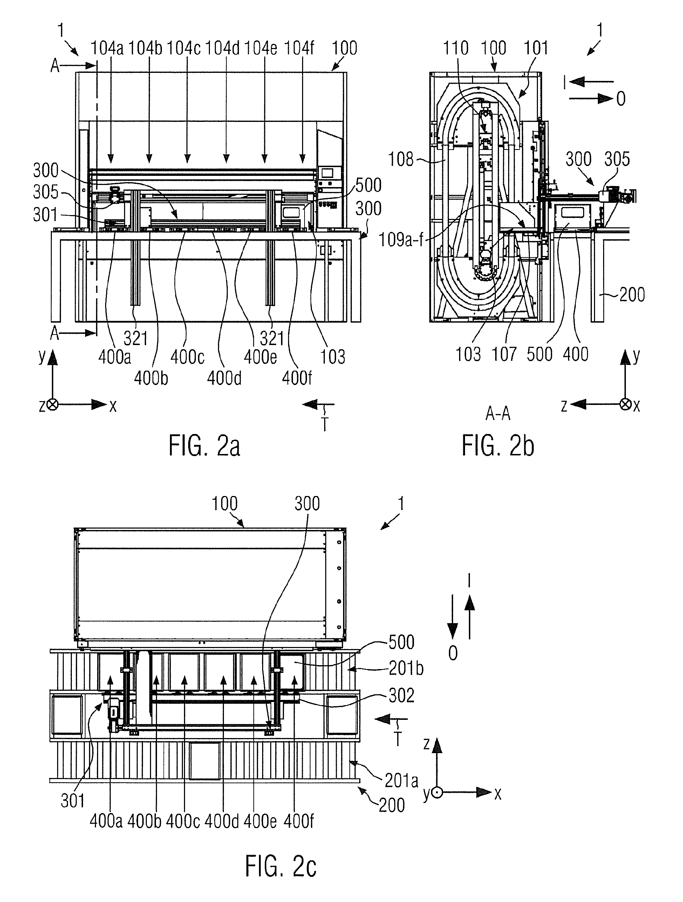

Fig. 2a zeigt den in Fig. 1 dargestellten Abschnitt des Lagers 1 in einer schematischen Vorderansicht. Hier ist ersichtlich, dass die Lagergutträger 400 in Transportrichtung T in einer Reihe vor der Beschickungs- und/oder Entnahmeöffnung 103 angeordnet und bereit sind, gleichzeitig bzw. simultan in die Beschickungs- und/oder Entnahmeöffnung 103 geschoben zu werden bzw. simultan aus der Beschickungs- und/oder Entnahmeöffnung 103 hinausgezogen wurden. Die Beschickungs- und/oder Entnahmestellen 104 lassen sich als Beschickungs- und/oder Entnahmestellen 104a bis 104f definieren, denen entsprechend Lagergutträger 400a bis 400f zugewiesen sein können, von denen letzterer das Lagergut 500 trägt.

Fig. 2b zeigt den in Fig. 1 und 2a dargestellten Abschnitt des Lagers 1 in einer schematischen Querschnittsansicht entlang der in Fig. 2a eingezeichneten Schnittlinie A-A. Hier ist ersichtlich, dass das Lagersystem 100 als Paternoster- bzw. Umlauflager ausgestaltet ist, in dessen Lagerraum 101 Lagerabschnitte 107 motorisch angetrieben entlang einer Umlaufeinrichtung 108 beweglich sind. Somit können die Lagergutträger 400a bis 400f auf entsprechend ihnen zugewiesenen Lagerplätzen 109a bis 100f von der Beschickungs- und/oder Entnahmeöffnung 103 weg und zu dieser hin transportiert werden, indem sie auf einer durch die Umlaufeinrichtung 108 vorgegebenen Umlaufbahn innerhalb des Lagerraums 101 bewegt werden. Die Bewegung der Lagerplätze 109a bis 109f kann dabei durch eine Antriebseinrichtung 110 realisiert werden. Die Antriebseinrichtung 110 kann Antriebs-, Steuer- sowie Kommunikationsmittel beinhalten, die den Umlauf der Lagerabschnitte 107 sowie darauf angeordneter bzw. definierter Lagerplätze 109a bis 109f steuern oder regeln sowie einen gezielten Zugriff auf die Lagerplätze 109a bis 109f an der Beschickungs- und/oder Entnahmeöffnung 103 ermöglichen.

Fig. 2c zeigt den in Fig. 1, 2a und 2b dargestellten Abschnitt des Lagers 1 in einer schematischen Draufsicht. Hier ist ersichtlich, dass die Beschickungs- und/oder Entnahmevorrichtung zwischen den beiden Transportbahnen 201 a und 201 b angeordnet ist, so dass mit ihr auf beiden Transportbahnen 201 a, 201 b befindliche Lagergutträger 400 in das Lagersystem 100 bzw. in ein dem Lagersystem 100 entgegen der Querrichtung Z an der Transportvorrichtung 200 gegenüberliegenden Lagersystem 100 (nicht gezeigt) ein- und/oder ausgelagert werden können.

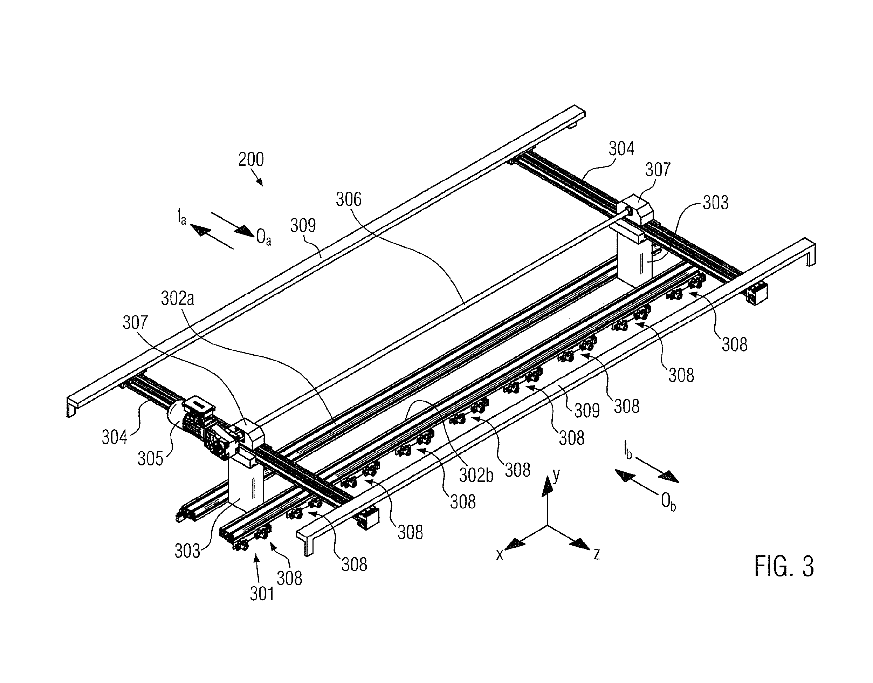

Fig. 3 zeigt die Beschickungs- und/oder Entnahmevorrichtung 300 in einer schematischen Perspektivansicht. Hier wird ersichtlich, dass die Verschiebeachsen 302a und 302b der Beschickungs- und/oder Entnahmevorrichtung 300 mit einer Vielzahl, im vorliegenden Fall jeweils neun Verschiebeorganen 308 bestückt sind. Die Verschiebeorgane 308 sind so angeordnet und ausgerichtet, dass mit ihnen die Lagergutträger 400 in Einlagerungsrichtung I und Auslagerungsrichtung O bewegt werden können. Hierbei ist zu beachten, dass für die Verschiebeachsen 302a und 302b die Einlagerungsrichtung I sowie die Auslagerungsrichtung O jeweils umgekehrt gelten, weil die Verschiebeachsen 302a und 302b ausgestaltet sind, in jeweils entgegengesetzten Richtungen Zug- und Druckkräfte auf die Lagergutträger 400 auszuwirken. Somit sind die der Verschiebeachse 302b zugeordnete Einlagerungsrichtung I und Auslagerungsrichtung O mit einem b indiziert und die der Verschiebeachse 302a zugeordnete Einlagerungsrichtung I und Auslagerungsrichtung O mit einem a indiziert.

Ferner ist in Fig. 3 erkennbar, dass die Beschickungs- und/oder Entnahmevorrichtung 300 über Stabilisierungselemente 309 verfügt, die in Form von Trägern die Schienen 304 an deren Endabschnitten miteinander verbinden und somit die statische Stabilität der Beschickungs-und/oder Entnahmevorrichtung 300 verbessern.

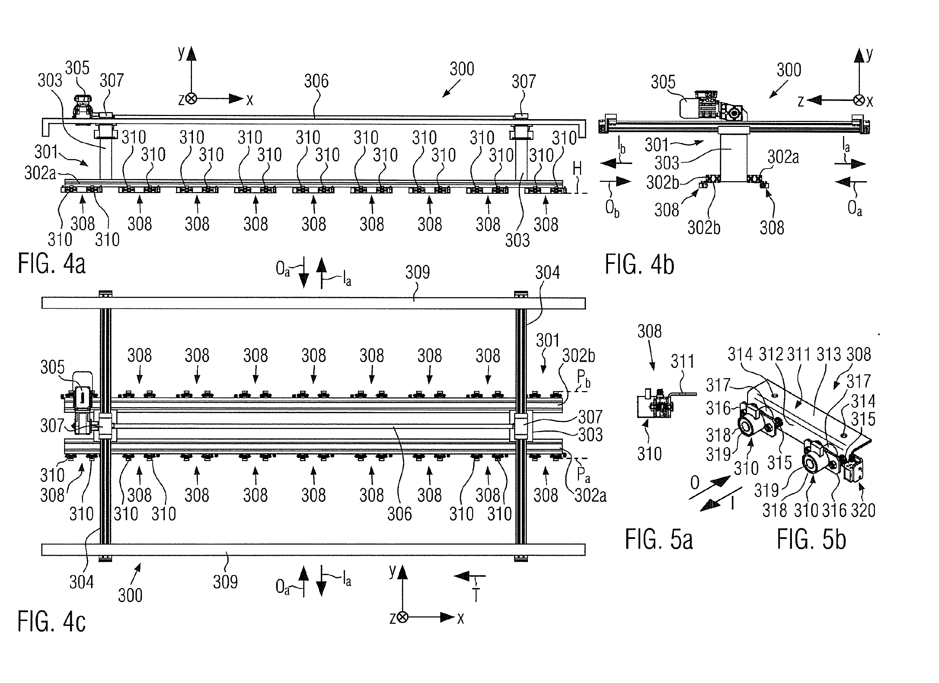

Fig. 4a zeigt die Verschiebeeinrichtung 301 der Beschickungs- und/oder Entnahmevorrichtung 300 in einer schematischen Vorderansicht. Hier ist ersichtlich, dass die Verschiebeorgane 308 jeweils zwei Verschiebeelemente 310 aufweisen. Die Verschiebeorgane 308 bzw. Verschiebeelemente 310 an der Verschiebeachse 302a sowie auf der hier nicht ersichtlichen Verschiebeachse 302b sind auf einer gemeinsamen Verschiebehöhe H angeordnet.

Fig. 4b zeigt die Verschiebeeinrichtung 301 der Beschickungs- und/oder Entnahmevorrichtung 300 in einer schematischen Seitenansicht. Die Verschiebeorgane 308 an den Verschiebeachsen 302a und 302b ragen jeweils in der Einlagerungsrichtung Iₐ bzw. I_{b} von den Verschiebeachsen 302a und 302b vor. Des Weiteren sind die Verschiebeorgane 308 nach unten, also entgegen der Höhenrichtung Y von den Verschiebeachsen 302a und 302b abgesetzt angeordnet.

Fig. 4c zeigt die Verschiebeeinrichtung 301 der Beschickungs- und/oder Entnahmevorrichtung 300 in einer schematischen Draufsicht. Hier ist ersichtlich, dass die Verschiebeorgane 308 mit ihren Verschiebeelementen 310 an den Verschiebeachsen 302a und 302b jeweils in einer gemeinsamen Verschiebeebene Pₐ bzw. P_{b} angeordnet sind.

Fig. 5a zeigt eines der Verschiebeorgane 308 in einer schematischen Seitenansicht. Das Verschiebeelement 310 ist an einem Montageprofil 311 befestigt, das ausgestaltet ist, an den Verschiebeachsen 302a und 302b angebracht zu sein.

Fig. 5b zeigt das Verschiebeorgan 308 in einer schematischen Perspektivansicht. Die beiden Verschiebeelemente 310 des Verschiebeorgans 308 sind an einer Stirnseite 312 des Montageprofils 311 befestigt. Die Stirnseite 312 weist in Einlagerungsrichtung I. Auf einer Oberseite 313 des Montageprofils 311 sind Montageelemente 314 in Form von Bohrungen angeordnet, über welche das Montageprofil 311 beispielsweise durch Verschrauben auf der Unterseite der Verschiebeachsen 302a, 302b befestigt werden kann.

Die Verschiebeelemente 310 können über jeweils zwei Befestigungselemente 315 an der Stirnseite 312 befestigt sein. Die Befestigungselemente 312 können mit jeweils einer Grundplatte 316 des Montageelements verbunden sein, in deren Endabschnitten die Befestigungselemente 315 derart aufgenommen sind, dass die Grundplatte 316 relativ zur Stirnseite 312 verschieblich ist. Die Befestigungselemente 315 können in der Grundplatte 316 und/oder der Stirnseite 312 verschieblich aufgenommen sein, um einen Bewegungsspielraum der Grundplatte 316 relativ zu der Stirnseite 312 in der Einlagerungsrichtung I zu begrenzen. Zwischen den Befestigungselementen 315 eines Verschiebelements 310 kann jeweils ein Dämpfungselement 317 angeordnet sein. Das Dämpfungselement 317 hält die Verschiebeelemente 310 elastisch in der jeweiligen Verschiebeebene Pₐ oder P_{b}.

Auf der in Einlagerungsrichtung I weisenden Seite der Grundplatte 316 kann das Montageelement 310 einen Verschiebekörper 318 in Form eines hohlzylindrischen Grundkörpers besitzen, in dem ein Zugelement 319 aufgenommen ist. Bei Aktivierung des Zugelements 319 übt das jeweilige Verschiebeelement 310 eine Zugkraft auf das Handhabungselement 404 des Lagergutträgers 400 aus. Beispielsweise kann das Zugelement 319 zylindrisch ausgeformt in den Verschiebekörper 318 eingepasst sein.

Ferner besitzt das Verschiebeorgan 308 eine Sensorik 320, die ausgestaltet ist, das Vorhandensein eines Lagergutträgers 400 am Verschiebeorgan 308 zu erfassen. Darüber hinaus kann die Sensorik 320 dazu ausgestaltet sein, mit einem Identifikationselement an einem Lagergutträger 400 zusammen zu wirken, das beispielsweise in das Handhabungselement 404 integriert sein kann. Über das Informationselement kann die Sensorik 320 Informationen über die auf dem Lagergutträger 400 befindlichen Ware bzw. das Lagergut 500 beziehen oder auf den Lagergutträger 400 übertragen, um ein ordnungsgemäßes Ein- bzw. Auslagern des Lagergutträgers 400 zu überprüfen und nachzuverfolgen.

Im Rahmen des Erfindungsgedankens sind Abweichungen von den oben beschriebenen Ausführungsformen möglich. So kann ein erfindungsgemäßes Lager 1 beliebig viele an einer und/oder zu beiden Seiten der Transportvorrichtung 200 angeordneten Lagersysteme 100 aufweisen, die den jeweiligen Anforderungen gemäß ausgestaltet sein können. So können die Lagersysteme 100 mit den jeweiligen Anforderungen gemäß ausgestalteten und dimensionierten Lagerräumen 101 versehen sein, die in Gehäusen 102 aufgenommen sein können. Die Beschickungs- und/oder Entnahmeöffnungen 103 der Lagersysteme 100 können den jeweiligen Anforderungen gemäß mit beliebig vielen Beschickungs- und/oder Entnahmestellen 104 versehen und mit Türelementen 105 verschließbar ausgestaltet sein. Es ist auch denkbar, dass ein Lagersystem 100 mehrere übereinander angeordnete Beschickungs- und/oder Entnahmeöffnungen 103 aufweist. So können beispielsweise zwei Beschickungs- und/oder Entnahmeöffnungen 103 übereinander angeordnet sein, um über diese möglichst gleichzeitig oder kurz aufeinander folgend Lagergutträger 400 ein- und auslagern zu können. Die Bedieneinrichtung 106 eines jeden Lagersystems 100 kann den jeweiligen Anforderungen gemäß ausgestaltet sein, um durch eine Bedienperson (nicht gezeigt) oder automatisiert das Lagersystem 100 zu steuern. Die Lagerabschnitte 107 sind im Lagersystem 100 beliebig anordenbar. Die Anordnung der Lagerabschnitte 107, wie hierin gezeigt, an einer Umlaufeinrichtung 108 hat den Vorteil, dass eine Reihe von Lagerplätzen 119a bis 119f gleichzeitig zur Beschickungs- und/oder Entnahmeöffnung 103 befördert werden und dort durch die Beschickungs- und/oder Entnahmevorrichtung 300 bedient werden kann. Dementsprechend können Antriebseinrichtungen 110 des Lagersystems beliebig ausgestaltet sein, um den jeweiligen Anforderungen gerecht zu werden.

Die Transportvorrichtungen 200 können den jeweiligen Anforderungen gemäß beliebig ausgestaltete Transportbahnen 201 a und 201 b aufweisen, die aufgeständert sein können, wie hierin durch die Ständer 202 verdeutlicht. Die Transportvorrichtungen 200 können beliebig viele den jeweiligen Anforderungen gemäß ausgestaltete Transfereinrichtungen 203 aufweisen, um Lagergutträger 400 zwischen den Transportbahnen 201 a und 201 b auszutauschen oder zwischen zu lagern, insbesondere damit die Lagergutträger 400 in einer gewünschten Reihenfolge entsprechend der Lagerplätze 119a bis 119f ein- bzw. ausgelagert werden können. Die Transportvorrichtung 200 bzw. deren Transportbahnen 201 a und 201 b können den jeweiligen Anforderungen gemäß motorisch angetrieben und elektronisch gesteuert sein. Es ist auch möglich, dass die Transportbahnen 201 a und 201 b zumindest abschnittsweise als Staurollenbahnen passiv ausgestaltet sind.

Die Beschickungs- und/oder Entnahmevorrichtung 300 kann mit den jeweiligen Anforderungen gemäß ausgestalteten Verschiebeeinrichtungen 301 versehen sein, die sowohl in und entgegen der Höhenrichtung Y als auch in ihrer jeweiligen Einlagerungsrichtung I und Auslagerungsrichtung O bzw. Iₐ, I_{b}, Oₐ, O_{b} bewegliche Verschiebeachsen 302a und 302b mit einer den jeweiligen Anforderungen gemäß wählbaren Anzahl daran befestigter Verschiebeorgane 308 aufweisen kann. Zur Beweglichkeit der Verschiebeeinrichtung 301 bzw. der Verschiebeachsen 302a und 302b können die Aufhängungen 303 den jeweiligen Anforderungen gemäß auf den Schienen 304 in der Einlagerungsrichtung I und Auslagerungsrichtung O verfahrbar ausgestaltet sein. So ist es beispielsweise denkbar, dass an den Endabschnitten der Achsen 306 jeweils Zahnräder sitzen und die Schienen 304 zumindest abschnittsweise als Zahnstangen ausgestaltet sind, um präzise die Aufhängungen 303 mit den daran befestigten Verschiebeachsen 302a und 302b in der Einlagerungsrichtung I und Auslagerungsrichtung O zu verfahren. Die Aufhängungen 303 oder die gesamten Verschiebeeinrichtungen 301 können selber bzw. auf einen in Fig. 1 gezeigten Ständerwerk 321 in sowie entgegen der Höhenrichtung Y verfahrbar angebracht bzw. ausgestaltet sein, um die Verschiebehöhe H den jeweiligen Anforderungen gemäß auf eine Höhe einer Transportbahn 201 a, 201 b bzw. der darauf angeordneten Lagergutträger 400 zu verfahren, damit die Lagergutträger 400 in die auf der jeweiligen Höhe angeordnete Beschickungs-und/oder Entnahmeöffnung 103 eingeschoben oder aus dieser herausgezogen werden können. Stabilisierungselemente 309 können den jeweiligen Anforderungen gemäß vorgesehen sein, um die Stabilität der Beschickungs- und/oder Entnahmevorrichtung 300 zu erhöhen.

Die Verschiebeorgane 308 können den jeweiligen Anforderungen gemäß mit einer beliebigen Anzahl von Verschiebeelementen 310 versehen sein. Die Auswahl von zwei Verschiebeelementen pro Verschiebeorgan 308 erweist sich als Vorteil, um in der Verschiebeebene P definierte Zug- bzw. Druckkräfte auf die Lagergutträger 400 auszuüben. Die Montageprofile 311 können den jeweiligen Anforderungen gemäß mit Stirnseiten 312, Oberseiten 313 und Montageelementen 314 ausgestattet sein, um die Verschiebeelemente 310 zu tragen und die Verschiebeorgane 308 an den Verschiebeachsen 302a, 302b zu befestigen.

Die Verschiebeelemente 315 können den jeweiligen Anforderungen gemäß ausgestaltete Grundplatten 312 aufweisen, die über Dämpfungselemente 317 in Auslagerungsrichtung O auf den Montageprofilen 311 elastisch abgestützt sein können. Dementsprechend können die Befestigungselemente 315 den jeweiligen Anforderungen gemäß ausgewählt sein. Die Verschiebekörper 318 können den jeweiligen Anforderungen gemäß ausgeformt und mit Verschiebekörpern 318 und Zugelementen 319 ausgestattet sein. Die Sensorik 320 ist den jeweiligen Anforderungen gemäß wählbar, um mit einem Lagergutträger 400 bzw. einem daran angebrachten Identifikationselement zusammen zu wirken, das beispielsweise in das Handhabungselement 404 integriert sein kann.

Die Lagergutträger 400 können den jeweiligen Anforderungen gemäß eine Aufnahmefläche 401, die von einem Rand 402 umgeben sein kann. Es ist von Vorteil, an den Stirnseiten 403 und/oder seitlich der Lagergutträger 400 Handhabungselemente 404 vorzusehen, damit die Lagergutträger 400 mit den Verschiebeorganen 308 zusammen wirken können.

### Bezugszeichen

| | |
|---|---|
| 1. | Lager |
| 100 | Lagersystem |
| 101 | Lagerraum |
| 102 | Gehäuse |
| 103 | Beschickungs- und/oder Entnahmeöffnung |
| 104 | Beschickungs- und/oder Entnahmestelle |
| 105 | Türelement |
| 106 | Bedieneinrichtung |
| 107 | Lagerabschnitte |
| 108 | Umlaufeinrichtung |
| 109 | Lagerplatz |
| 109a - f | Lagerplätze |
| 110 | Antriebseinrichtung |
| | |
| 200 | Transportvorrichtung |
| 200 | Transportbahn |
| 201 a, b | Transportbahn |
| 202 | Ständer |
| 203 | Transfereinrichtung |
| | |
| 300 | Beschickungs- und/oder Entnahmevorrichtung |
| 301 | Verschiebeeinrichtung |
| 302 | Verschiebeachse |
| 302a, b | Verschiebeachse |
| 303 | Aufhängung |
| 304 | Schiene |
| 305 | Elektromotor |
| 306 | Achse |
| 307 | Getriebe |
| 308 | Verschiebeorgan |
| 309 | Stabilisierungselement |
| 310 | Verschiebeelement |
| 311 | Montageprofil |
| 312 | Stirnseite des Montageprofils |
| 313 | Oberseite des Montageprofils |
| 314 | Montageelement |
| 315 | Befestigungselement |
| 316 | Grundplatten |
| 317 | Dämpfungselement |
| 318 | Verschiebekörper |
| 319 | Zugelement |
| 320 | Sensorik |
| 321 | Ständerwerk |
| 400 | Lagergutträger |
| 401 | Aufnahmefläche |
| 402 | Rand |
| 403 | Stirnseite |
| 404 | Handhabungselement |
| | |
| 500 | Lagergut |
| H | Verschiebehöhe |
| P | Verschiebeebene |
| | |
| I | Einlagerungsrichtung |
| Iₐ, I_{b} | Einlagerungsrichtung |
| O | Auslagerungsrichtung |
| Oₐ, O_{b} | Auslagerungsrichtung |
| | |
| T | Transportrichtung |
| | |
| X | Seitrichtung |
| Y | Höhenrichtung |
| Z | Querrichtung |

## Patentansprüche

1. Beschickungs- und/oder Entnahmevorrichtung (300) zum Beschicken eines automatisierten Lagersystems (100) mit Lagergutträgern (400) bzw. Entnehmen der Lagergutträger (400) aus dem Lagersystem (100), mit einer Verschiebeeinrichtung (301), die ausgestaltet ist, zum Verschieben eines Lagergutträgers (400) in einer Einlagerungsrichtung (I) und/oder in einer Auslagerungsrichtung (O) an einer Beschickungs- und/oder Entnahmestelle (104) des Lagersystems (100) mit dem Lagergutträger (400) zusammenzuwirken, **dadurch gekennzeichnet, dass** die Verschiebeeinrichtung (301) ausgestaltet ist, an einer von der Beschickungs- und/oder Entnahmestelle (104) beabstandeten weiteren Beschickungs- und/oder Entnahmestelle (104) des Lagersystems (100) mit wenigstens einem weiteren Lagergutträger (400) zusammenzuwirken.

2. Beschickungs- und/oder Entnahmevorrichtung (300) nach Anspruch 1, **dadurch gekennzeichnet, dass** die wenigstens eine Verschiebeeinrichtung (301) ausgestaltet ist, an der Beschickungs- und/oder Entnahmestelle (104) und der weiteren Beschickungs- und/oder Entnahmestelle (104) mit dem Lagergutträger (400) bzw. dem wenigsten einen weiteren Lagergutträger (400) gleichzeitig zusammenzuwirken.

3. Beschickungs- und/oder Entnahmevorrichtung (300) nach Anspruch 1 oder 2, **dadurch gekennzeichnet, dass** die Verschiebeeinrichtung (301) ein Verschiebeorgan (308) und wenigstens ein weiteres Verschiebeorgan (308) aufweist, die ausgestaltet sind, mit dem Lagergutträger (400) bzw. dem wenigstens einen weiteren Lagergutträger (400) zusammenzuwirken.

4. Beschickungs- und/oder Entnahmevorrichtung (300) nach Anspruch 3, **dadurch gekennzeichnet, dass** das Verschiebeorgan (308) und das wenigstens eine weitere Verschiebeorgan (308) in einer gemeinsamen Verschiebehöhe (H) angeordnet sind.

5. Beschickungs- und/oder Entnahmevorrichtung (300) nach Anspruch 3 oder 4, **dadurch gekennzeichnet, dass** das Verschiebeorgan (308) und das wenigstens eine weitere Verschiebeorgan (308) in einer gemeinsamen Verschiebeebene (P) angeordnet sowie gleich und/oder entgegengesetzt ausgerichtet sind.

6. Beschickungs- und/oder Entnahmevorrichtung (300) nach einem der Ansprüche 3 bis 5, **dadurch gekennzeichnet, dass** das Verschiebeorgan (308) und das wenigstens eine weitere Verschiebeorgan (308) an einer gemeinsamen Verschiebeachse (302, 302b) angebracht sind.

7. Beschickungs- und/oder Entnahmevorrichtung (300) nach Anspruch 6, **dadurch gekennzeichnet, dass** die Verschiebeachse (302a, 302b) und eine weitere Verschiebeachse (302a, 302b) beide an einer Aufhängung (303) gemeinsam beweglich montiert sind.

8. Beschickungs- und/oder Entnahmevorrichtung (300) nach einem der Ansprüche 3 bis 7, **dadurch gekennzeichnet, dass** die Verschiebeorgane (308) jeweils wenigstens ein Verschiebeelement (310) aufweisen, das im Betrieb der Beschickungs- und/oder Entnahmevorrichtung (300) in der Einlagerungsrichtung (I) eine Druckkraft und/oder in der Auslagerungsrichtung (O) eine Zugkraft auf den Lagergutträger (400) auswirkt.

9. Beschickungs- und/oder Entnahmevorrichtung (300) nach Anspruch 8, **dadurch gekennzeichnet, dass** die Verschiebeelemente (310) getrennt voneinander aktivierbar sind.

10. Beschickungs- und/oder Entnahmevorrichtung (300) nach Anspruch 8 oder 9, **dadurch gekennzeichnet, dass** die Verschiebeelemente (310) jeweils wenigstens ein Zugelement (319) beinhalten.

11. Lager (1), **gekennzeichnet, durch** wenigstens eine Beschickungs- und/oder Entnahmevorrichtung (300) nach einem der Ansprüche 1 bis 8.

12. Lager (1) nach Anspruch 11, **dadurch gekennzeichnet, dass** die Beschickungs- und/oder Entnahmevorrichtung (300) zwischen zwei übereinander liegenden Beschickungs- und/oder Entnahmestellen (104) angeordnet ist.

13. Lager (1) nach Anspruch 11 oder 12, **dadurch gekennzeichnet, dass** die Beschickungs-und/oder Entnahmevorrichtung (300) zwischen sich an einer Transportvorrichtung (200) gegenübeliegenden Lagersystemen (100) angeordnet ist

14. Verfahren, bei dem mit einer Beschickungs- und/oder Entnahmevorrichtung (300) ein Lagergutträger (400) durch Verschieben an einer Beschickungs- und/oder Entnahmestelle (104) eines automatisierten Lagersystems (100) in das Lagersystem (100) ein bzw. aus dem Lagersystem (100) ausgelagert wird, **dadurch gekennzeichnet, dass** mit der Beschickungs- und/oder Entnahmevorrichtung (300) ein weiterer Lagergutträger (400) durch Verschieben an einer weiteren Beschickungs- und/oder Entnahmestelle (104) in das Lagersystem (100) ein bzw. aus dem Lagersystem (100) ausgelagert wird.

15. Verfahren nach Anspruch 14, **dadurch gekennzeichnet, dass** das Verschieben des Lagergutträgers (400) und des wenigstens einen weiteren Lagergutträgers (400) simultan erfolgt.
